# EUROPÄISCHE PATENTSCHRIFT

(11) **EP 0 784 537 B1**
(45) Veröffentlichungstag und Bekanntmachung des Hinweises auf die Patenterteilung: **27.05.1998**
(21) Anmeldenummer: 95926870.7
(22) Anmeldetag: 13.07.1995
(51) Int. Cl.: B29C 63/20, B21D 49/00

(54) **VERFAHREN ZUM HERSTELLEN VON FASERVERBUNDROHREN MIT METALLISCHER OBERFLÄCHE**
PROCESS FOR PRODUCING COMPOSITE FIBRE PIPES WITH METAL SURFACES
PROCEDE DE PRODUCTION DE TUBES EN MATERIAU COMPOSITE RENFORCE PAR FIBRES A SURFACE METALLIQUE

(30) Priorität: 07.10.1994 DE 4435855
(43) Veröffentlichungstag der Anmeldung: 23.07.1997
(73) Patentinhaber: Urenco Deutschland GmbH, D-52409 Jülich (DE)
(72) Erfinder: Bäumer, Thomas, 52457 Aldenhoven (DE)
(74) Vertreter: Gottlob, Peter, Dipl. Ing.
(86) Internationale Anmeldenummer: EP9502741
(87) Internationale Veröffentlichungsnummer: WO9611100

(56) Entgegenhaltungen:
- EP-A- 0 406 172
- EP-A- 0 481 850
- WO-A-91/06499
- DE-A- 3 527 912
- DE-U- 8 406 019

## Beschreibung

Die Erfindung betrifft ein Verfahren zum Herstellen von Faserverbundrohren mit äußerer metallischer Oberfläche gemäß dem Oberbegriff von Anspruch 1.

Aus der EP 0 290 798 B1 ist ein Verfahren bekannt, bei dem zunächst ein mit einem Kunstharz imprägniertes Gelege aus unidirektional ausgerichteten Fasern so auf einen in radialer Richtung dehnbaren Dorn gewickelt wird, daß die Faserbündel parallel zur Dornachse verlaufen. Sodann wird der mit den Fasergelegen umwickelte Dorn in ein dünnwandiges Metallrohr eingelegt und radial gedehnt, um das Fasergelege gegen die Innenwand des Metallrohres Zu pressen. Nach dem Aushärten des Kunstharzes und der Zurücknahme der Dehnung wird der Dorn entfernt, so daß nur noch das metallbeschichtete, faserverstärkte Kunststoffrohr vorliegt. Damit können metallbeschichtete Faserverbundrohre mit hoher Biegesteifigkeit hergestellt werden; die Druckfestigkeit sowie die Dauerhaftigkeit der Verbindung zwischen Faserverbundrohr und metallischem Hüllrohr sind hingegen sehr viel geringer.

In dem Prospekt DG 2142 der Firma Stork, Boxmeer, Holland, wird ein Verfahren beschrieben, mit dem dünne Metallhülsen mit Hilfe von Druckluft auf einen massiven, metallischen Walzenkörper aufgeschoben werden können. Hierzu weist der Mantel des Walzenkörpers radiale Bohrungen auf, die direkt sowie über einen der beiden Walzenzapfen mit dem Innenraum des Walzenkörpers in Verbindung stehen, wobei der Innenraum seinerseits über eine Bohrung im anderen Walzenzapfen mit einer Druckluftquelle verbunden ist. Beim Aufschieben wird die Metallhülse "aufgeblasen" (gedehnt) und sitzt nach Wegfall der Druckluft unverrückbar auf dem Walzenkörper fest. Auf das Verbinden von Faserverbundrohren mit metallischen Hülsen läßt sich diese Methode jedoch nicht ohne weiteres übertragen, da die Verbindung zwischen Walzenzapfen und Faserverbundrohr dem hohen Innendruck der Druckluft von einigen bar nicht standhält. Auch würde durch die radialen Bohrungen die Festigkeit des Faserverbundrohres beeinträchtigt.

Die Erfindung hat zur Aufgabe, ein Verfahren der gattungsgemäßen Art so zu verbessern, daß die Formstabilität sowie die sichere Verbindung zwischen Faserverbundrohr und Metallhülse auch bei radialen Belastungen, z. B. beim Auftreten von Zentrifugalkräften, gewährleistet ist.

Die EP-A-0481850 zeigt die Montage einer rohrförmigen Hülle aus Verbundmaterial auf ein Trägerrohr mittels eines unter Druck stehenden Fluids. Das Aufziehen einer dünnwandigen Metallhülse auf ein Faserverbundrohr wird in dieser Druckschrift nicht angesprochen.

Aus der WO91/06499 ist es bekannt, eine Metallhülse durch ERwärmen aufzuweiten und sodenn ein Faserverbundrohr in die Metallhülse zu verbringen, die nach dem Erkalten unter Spannung auf dem Faserverbundrohr sitzt. Alternativ wird vorgeschlagen, den Durchmeser einer zu großen Metallhülse durch mechanische Verformung, z.B. durch Stauchen, so herabzusetzen, daß die Metallhülse unter Spannung das Faserverbundrohr umschließt. Beide Methoden stoßen, insbesondere bei langgestreckten Rohren auf fertigungstechnische Schwierigkeiten.

Zur Lösung dieser Aufgabe werden die im Kennzeichen von Anspruch 1 enthaltenen Maßnahmen vorgeschlagen. Die hierauf bezogenen Unteransprüche sind vorteilhafte Ausgestaltungen dieser Lösung.

Es hat sich in überraschender Weise gezeigt, daß die eingangs genannte Druckluft-Methode, erfindungsgemäß abgewandelt, auch für das sichere und dauerhafte Verbinden eines Faserverbundrohres mit einem dünnwandigen Metallrohr geeignet ist, wenn man das Faserverbundrohr mit Umfangswicklungen versieht, die dem Rohr die erforderliche Festigkeit gegenüber dem äußeren Gasdruck verleihen, und wenn man das Druckgas nur von einer Stirnseite von außen her den radialen Bohrungen des Adapterstückes zuführt und den Gasdruck so hoch einstellt, daß das Metallrohr über die gesamte Länge des Faserverbundrohres geschoben werden kann. Eine ausreichend dichte Verbindung zwischen Adapterstück und Faserverbundrohr zur Vermeidung von Druckgasverlusten genügt; radiale Bohrungen in dem Faserverbundrohr selbst sind nicht erforderlich.

Ausführungsbeispiele der Erfindung werden im folgenden anhand der Zeichnungen erläutert:
Figur 1 veranschaulicht die Herstellungsweise für eine Verbundwalze, bei der ein stirnseitiges Zapfenbauteil gleichzeitig als Adapterstück zur Druckluftzufuhr dient;
Figur 2 veranschaulicht eine Variante von Figur 1, bei dem die radiale Druckgas-Zufuhr über ein gesondertes Adapterstück erfolgt.

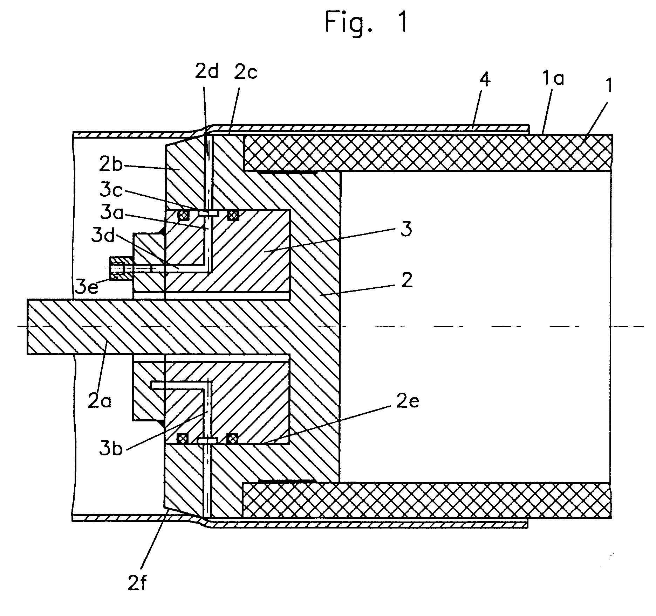

Die Figur 1 zeigt schematisch im Längsschnitt ein in Wickeltechnik hergestelltes Faserverbundrohr 1 aus Kohlenstoffasern und einer Epoxidharz-Matrix. Das Faserverbundrohr ist aus mehreren, übereinandergewickelten Faserschichten aufgebaut, wobei sich Schichten mit spiralförmig oder axial ausgerichteten Fasern mit Schichten aus Umfangswicklungen abwechseln. In das stirnseitige Ende des Faserverbundrohres 1 ist ein topfscheibenförmiges Adapterstück 2 eingeklebt, dessen zentraler Zapfen 2a zur Lagerung des fertigen Verbundrohres bei seiner Verwendung als schnellumlaufende Walze dient. Das Adapterstück 2 weist ferner einen Bund 2b auf, der von mehreren, gleichmäßig über seinen Außenmantel 2c verteilten, radialen Bohrungen 2d durchdrungen ist. Der Außenmantel 2c schließt sich bündig an den Außenmantel 1a des Faserverbundohres an. An den Innenmantel 2e des Adapterstückes 2 schließt sich ein ringscheibenförmiges Druckgas-Verteilerstück 3 an, über dessen Bohrungen 3a, 3b und Ringnuten 3c, 3d sowie einen Außenanschluß 3e die Bohrungen 2d mit Druckgas beaufschlagt werden können.

Über eine Schräge 2f am freien Ende des Außenmantels 2c wird eine dünnwandige Metallhülse 4 über den Bund 2b hinweggeschoben. Gleichzeitig werden die radialen Bohrungen 2d von dem außerhalb des Faserverbundrohres 1 gelegenen Anschluß 3e über das Verteilerstück 3 mit Preßluft von bis zu 20 bar beaufschlagt. Dadurch wird die Metallhülse 4 so weit gedehnt, daß sie sich sukzessive über die gesamte Länge des Faserverbundrohres 1 schieben bzw. ziehen läßt. Als Metallhülse 4 kann ein nahtloses, durch Fließdrückziehen oder Drückrollen hergestelltes, rostfreies Stahlrohr mit einer Wandstärke von 0,1 bis 0,3 mm verwendet werden. Der Innendurchmesser dieses Stahlrohres ist gegenüber dem Außenmantel 1a des Faserverbundrohres 1 so toleriert, daß es nach dem Abstellen der Preßluft das Faserverbundrohr 1 mit einem Preßsitz umschließt.

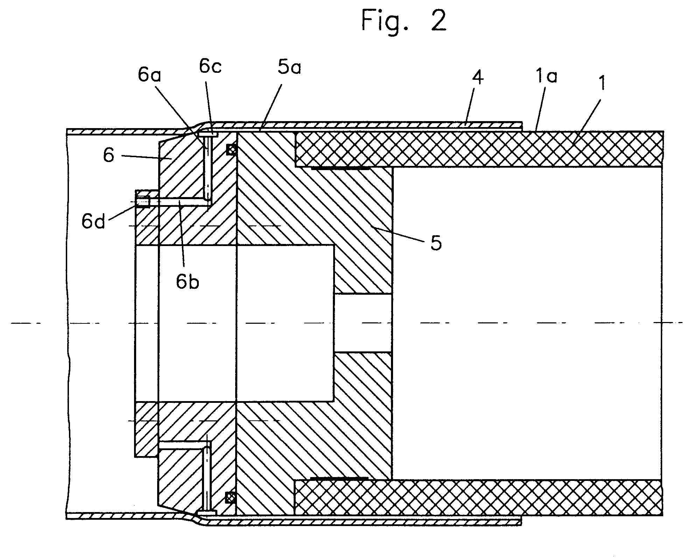

Bei der Variante gemäß Figur 2 ist stirnseitig in das Faserverbundrohr 1 eine Nabe 5 eingeklebt, deren Bund 5a bündig am Außenmantel 1a des Faserverbundrohres 1 anliegt. Diese Nabe 5 ist dicht und lösbar mit einem Adapterstück 6 verbunden, das mit radialen Bohrungen 6a und einer axialen Ringnut 6b, einer umlaufenden Gasverteilernut 6c und einem Druckgasanschluß 6d versehen ist und dessen Funktion den Teilen 2 und 3 von Figur 1 entspricht. Diese Ausführungsform hat den Vorteil, daß man an den am Verbundrohr verbleibenden Naben- oder Zapfenteilen selbst für die herzustellenden Verbund-Walzen keine radialen Bohrungen anzubringen braucht, vielmehr kann das Adapterstück 6 wiederholt zum Aufziehen von Metallhülsen auf Faserverbundrohre verwendet werden.

An dem nicht dargestellten anderen Ende des Verbundrohrs 1 sind den Teilen 2 und 5 entsprechende Naben- oder Zapfenteile eingeklebt.

### Bezugszeichenliste:

- 1: Faserverbundrohr
- 1a: Außenmantel
- 2: Adapterstück
- 2a: Zapfen
- 2b: Bund
- 2c: Außenmantel
- 2d: Bohrungen
- 2e: Innenmantel
- 3: Druckgas-Verteilerstück
- 3a: Bohrungen
- 3b: Bohrungen
- 3c: Ringnut
- 3d: Ringnut
- 3e: Außenanschluß
- 4: Metallhülse
- 5: Nabe
- 5a: Bund
- 6: Adapterstück
- 6a: Bohrungen
- 6b: Ringnut
- 6c: Gasverteilernut
- 6d: Druckgasanschluß

## Patentansprüche

1. Verfahren zum Herstellen von Faserverbundrohren mit äußerer metallischer Oberfläche, bei dem das Faserverbundrohr mit einer dünnwandigen Metallhülse verbunden wird, gekennzeichnet durch folgendes Vorgehen:
a) das Faserverbundrohr (1) wird in Wickeltechnik hergestellt, wobei sich Schichten mit spiralförmig und/oder axial ausgerichteten Fasern mit Schichten aus Umfangswicklungen abwechseln;
b) an eine Stirnseite des Faserverbundrohres (1) wird ein ein- oder mehrteiliges, scheiben- oder ringförmiges Adapterstück (2) angeschlossen, das dicht an der Stirnseite des Faserverbundrohres (1) anliegt und das einen Bund (2b) aufweist, der von mehreren radialen Bohrungen (2d) zum Durchleiten von Druckgas durchdrungen ist und der bündig an den Außenmantel (1a) des Faserverbundrohres (1) anschließt;
c) die Metallhülse (4), deren Innendurchmesser minimal kleiner als der Außendurchmesser des Faserverbundrohres (1) ist, wird über den Mantel (2c) des Bundes (2b) mit den radialen Bohrungen (2d) hinweggeschoben; gleichzeitig werden die radialen Bohrungen (2d) von außerhalb des Innenraumes des Faserverbundrohres (1) her mit Druckgas beaufschlagt, das die Metallhülse (4) entlang dem Faserverbundrohr (1) aufweitet, so daß die Metallhülse (4) sukzessive über die gesamte Länge des Faserverbundrohres (1) geschoben und/oder gezogen werden kann und nach dem Abschluß dieses Vorganges und Abstellen des Druckgases mit einem Preßsitz das Faserverbundrohr (1) umschließt.

2. Verfahren nach Anspruch 1, dadurch gekennzeichnet, daß die Metallhülse (4) durch Fließdrückziehen oder Drückrollen hergestellt wird.

3. Verfahren nach Anspruch 1, dadurch gekennzeichnet, daß für das Aufweiten der Metallhülse (4) ein Gasdruck von bis zu 20 bar angewendet wird.

## Claims

1. Method of producing composite fibre pipes with an outer metallic surface, wherein the composite fibre pipe is connected to a thin-walled metal sleeve, characterised by the following procedure:
a) the composite fibre pipe (1) is produced by a winding technique, whereby layers with helically and/or axially orientated fibres alternate with layers of circumferential windings;
b) a one-piece or multi-part, disc-like or annular adapter (2) communicates with an end face of the composite fibre pipe (1), said adapter tightly abutting against the end face of the composite fibre pipe (1) and having a collar (2b), which is pierced by a plurality of radial bores (2d) for pressurised gas to be conducted therethrough, and which collar communicates flush with the outer covering (1a) of the composite fibre pipe (1);
c) the metal sleeve (4), the minimum internal diameter of which is smaller than the external diameter of the composite fibre pipe (1), is pushed over the covering (2c) of the collar (2b) with the radial bores (2d); at the same time, the radial bores (2d) are impinged from externally of the interior of the composite fibre pipe (1) with pressurised gas which widens the metal sleeve (4) along the composite fibre pipe (1) so that the metal sleeve (4) can be pushed and/or pulled successively over the entire length of the composite fibre pipe (1) and surrounds the composite fibre pipe (1) with a snug fit after this process has terminated and the pressurised gas has been disconnected.

2. Method according to claim 1, characterised in that the metal sleeve (4) is produced by an hydraulic pushing-and-pulling operation or by a pushing-and-rolling operation.

3. Method according to claim 1, characterised in that a gas pressure of up to 20 bar is used for the widening of the metal sleeve (4).

## Revendications

1. Procédé de production de tubes de matériau composite renforcé par des fibres à surface métallique extérieure, dans lequel le tube en matériau composite renforcé par fibres est lié par une gaine métallique à paroi mince, caractérisé par la procédure suivante :
a) le tube de matériau composite renforcé par fibres (1) est produit en technique d'enroulement, les couches avec des fibres en forme de spirale et/ou dirigées axialement alternant avec des couches en enroulements circonférentiels,
b) sur une face frontale du tube en matériau composite renforcé par fibres (1) est raccordé une pièce d'adaptateur (2) en une ou plusieurs parties, en forme de disque ou d'anneau, qui appuie de manière étanche sur la face frontale du tube en matériau composite renforcé par fibres (1) et qui comporte une collerette (2b), qui est traversée par plusieurs perçages radiaux (2d) pour le guidage du gaz comprimé et qui se raccorde à fleur sur l'enveloppe extérieure (1a) du tube en matériau composite renforcé par fibres (1),
c) la gaine métallique (4), dont le diamètre intérieur à son niveau minimal est plus petit que le diamètre extérieur du tube en matériau composite renforcé par fibres (1), est poussée sur l'enveloppe (2c) de la collerette (2b) avec les perçages radiaux (2d), en même temps les perçages radiaux (2d) sont soumis depuis l'extérieur de l'espace intérieur du tube de matériau composite renforcé par fibres (1) au gaz comprimé, qui élargit la gaine métallique (4) le long du tube de matériau composite renforcé par fibres (1), de sorte que la gaine métallique (4) peut être successivement poussée et ou tirée sur toute la longueur du tube (1) et après la fin de ce processus et l'arrêt du gaz comprimé elle entoure le tube en matériau composite renforcé par fibres (1) avec un ajustage serre.

2. Procédé selon la revendication 1,
caractérisé en ce que
la gaine métallique (4) est produite par étirage sous pression d'écoulement ou rouleaux presseurs.

3. Procédé selon la revendication 1,
caractérisé en ce que
pour l'élargissement de la gaine métallique (4) on utilise une pression de gaz allant jusqu'à 20 bars.
